# EUROPEAN PATENT APPLICATION

(11) **EP 4 745 750 A1**
(43) Date of publication of application: **20.05.2026**
(21) Application number: 25178252.0
(22) Date of filing: 22.05.2025
(51) Int. Cl.: G06F 3/14

(54) **SCREEN CASTING METHOD, ELECTRONIC DEVICE, AND STORAGE MEDIUM**

(30) Priority: 18.11.2024 CN 202411655295
(71) Applicant: Beijing Xiaomi Mobile Software Co., Ltd., Beijing 100085 (CN)
(72) Inventor: MA, Hui, Beijing, 100085 (CN); MEI, Shaoqing, Beijing, 100085 (CN); LI, Zitian, Beijing, 100085 (CN); CHEN, Yong, Beijing, 100085 (CN)
(74) Representative: Dehns Germany Partnerschaft mbB

(57) **Abstract**

A screen casting method includes: displaying at least one first application in a screen casting interface of a first device, wherein the at least one first application is an application in a second device and allows screen casting; selecting a target application from the at least one first application, where the target application is an application to be cast; and displaying a casting screen of the target application in the screen casting interface, wherein the casting screen of the target application is the casting screen of the target application displayed on a virtual screen of the second device.

## Description

### TECHNICAL FIELD

The present disclosure relates to the field of interconnection technology, and in particular to a screen casting method, an electronic device, and a storage medium.

### BACKGROUND

With the continuous improvement of interconnection technology, more and more electronic devices can be interconnected. User needs are becoming increasingly diversified and complex, and the forms of interconnection are gradually diverse. Casting content from one electronic device to another is a common form of interconnection.

### SUMMARY

According to a first aspect of the present disclosure, a screen casting method includes: displaying at least one first application in a screen casting interface of a first device, wherein the at least one first application is an application in a second device and allows screen casting; selecting a target application from the at least one first application, wherein the target application is an application to be cast; and displaying a casting screen of the target application in the screen casting interface, wherein the casting screen of the target application is the casting screen of the target application displayed on a virtual screen of the second device.

In some embodiments, the method further includes:
in response to a first turn-on operation, turning on a private screen casting mode, wherein the first turn-on operation is a turn-on operation of a private screen casting control in the screen casting interface, and
in the private screen casting mode, the first application is capable of casting on the first device, and a second application is not capable of casting on the first device, wherein the second application is an application in the second device and does not allow screen casting,

In some embodiments, the method further includes:
sending a first turn-on instruction to the second device, wherein the second device turns on the privacy screen casting mode based on the first turn-on instruction, and the first turn-on instruction is configured to indicate the first turn-on operation.

In some embodiments, the method further includes:
receiving a second turn-on instruction sent by the second device, wherein the second turn-on instruction is configured to indicate a second turn-on operation, and the second turn-on operation is a turn-on operation of a privacy screen casting control in the second device; and
based on the second turn-on instruction, turning on the privacy screen casting mode of the first device.

In some embodiments, the method further includes:
displaying an application management page in the screen casting interface, wherein one or more applications in the second device are displayed in the application management page; and
in response to a setting operation of an application in the application management page, setting the application to be the first application or a second application, wherein the second application is an application in the second device and does not allow screen casting.

In some embodiments, in response to the setting operation of the application in the application management page, setting the application to be the first application or the second application includes:
in response to a first setting operation of the application, setting the application to be the first application; wherein the first setting operation is an operation of adding the application to a first application list in the application management page, and the first application list includes one or more applications which allow screen casting; or
in response to a second setting operation of the application, setting the application to be the second application; wherein the second setting operation is an operation of adding the application to a second application list in the application management page, and the second application list includes one or more applications that do not allow screen casting.

In some embodiments, the method further includes:
sending a setting instruction to the second device, wherein the second device sets the application to be the first application or the second application based on the setting instruction, and the setting instruction is configured to indicate the setting operation of the application.

In some embodiments, the method further includes:
displaying the screen casting interface in a preset display state on a physical screen of the first device, wherein the preset display state includes a floating capsule display state, a small window display state or a full screen display state.

In some embodiments, the method further includes:
in response to a control operation on the target application, sending a control instruction to the second device, wherein the second device controls the target application on the virtual screen based on the control instruction, and the control instruction is configured to indicate the control operation on the target application.

According to a second aspect of the present disclosure, a screen casting method includes:
casting at least one first application to a first device, where the first application is an application in a second device and allows screen casting; and
in response to a target application in the at least one first application is an application to be cast, casting a screen of the target application displayed on a virtual screen of the second device to the first device, where the first device displays the casting screen in a screen casting interface.

In some embodiments, the method further includes:
receiving a first turn-on instruction sent by the first device, wherein the first turn-on instruction is configured to indicate a first turn-on operation, and the first turn-on operation is a turn-on operation of a privacy screen casting control in the screen casting interface; and
based on the first turn-on instruction, turning on a privacy screen casting mode, wherein the first device turns on the privacy screen casting mode in the screen casting interface.

In some embodiments, the method further includes:
in response to a second turn-on operation, turning on a privacy screen casting mode of the second device, and sending a second turn-on instruction to the first device, wherein the first device turns on the privacy screen casting mode of the first device based on the second turn-on instruction; wherein the second turn-on instruction is configured to indicate the second turn-on operation, and the second turn-on operation is a turn-on operation of a privacy screen casting control in the second device.

In some embodiments, the method further includes:
casting an application management page to the first device, wherein the first device displays the application management page in the screen casting interface, and the application management page displays one or more applications in the second device.

In some embodiments, the method further includes:
receiving a setting instruction sent by the first device, wherein the setting instruction is configured to indicate a setting operation of the target application in the application management page; and
based on the setting instruction, setting the target application to be the first application or a second application, wherein the first device sets the target application to be the first application or the second application.

In some embodiments, the method further includes:
displaying an application management page; wherein one or more applications in the second device are displayed in the application management page; and
in response to a setting operation of an application in the application management page, setting the application to be the first application or a second application, wherein the second application is an application in the second device and does not allow screen casting.

In some embodiments, in response to the setting operation of the application in the application management page, setting the application to be the first application or the second application includes:
in response to a first setting operation of the application, setting the application to be the first application; wherein the first setting operation is an operation of adding the application to a first application list in the application management page, and the first application list includes one or more applications which allow screen casting; or
in response to a second setting operation of the application, setting the application to be the second application; wherein the second setting operation is an operation of adding the application to a second application list in the application management page, and the second application list includes one or more applications that do not allow screen casting.

In some embodiments, the method further includes:
receiving a control instruction sent by the first device, wherein the control instruction is configured to indicate a control operation on the target application; and
based on the control instruction, controlling the target application on the virtual screen.

According to a third aspect of the present disclosure, there is provided a screen casting device adapted to perform the above screen casting method.

The above method of the present disclosure has the following beneficial effects:

The method provided by the embodiments of the present disclosure displays the applications that allow screen casting in the screen casting interface of the first device. The user can select the target application to be cast from the applications that allow screen casting, so as to display the casting screen of the target application in the screen casting interface, thereby realizing the screen casting of the application while improving the security and privacy during screen casting.

It should be understood that the above general description and the detailed description below are only exemplary and explanatory, and do not limit the present disclosure.

### BRIEF DESCRIPTION OF THE DRAWINGS

The accompanying drawings herein are incorporated into and constitute a part of the specification, illustrate embodiments consistent with the present invention, and together with the description, are used to explain the principles of the present disclosure.
FIG. 1 is a flowchart of a screen casting method according to an example embodiment;
FIG. 2 is a flowchart of a screen casting method according to an example embodiment;
FIGS. 3A-3C are schematic diagrams of a screen casting interface according to an example embodiment;
FIG. 4 is a schematic diagram of a screen casting interface according to an example embodiment;
FIG. 5 is a schematic diagram of a screen casting interface according to an example embodiment;
FIG. 6 is a flowchart of a screen casting method according to an example embodiment;
FIG. 7 is a schematic diagram of an application management page according to an example embodiment;
FIG. 8 is a flowchart of a screen casting method according to an example embodiment;
FIG. 9 is a flowchart of a screen casting method according to an example embodiment;
FIG. 10 is a flowchart of a screen casting method according to an example embodiment;
FIG. 11 is a flowchart of a screen casting process according to an example embodiment;
FIG. 12 is a block diagram of a screen casting device according to an example embodiment;
FIG. 13 is a block diagram of a screen casting device according to an example embodiment;
FIG. 14 is a block diagram of an electronic device according to an example embodiment.

### DETAILED DESCRIPTION

Here, example embodiments will be described in detail, and examples thereof are shown in the accompanying drawings. When the following description refers to the drawings, unless otherwise indicated, the same numbers in different drawings represent the same or similar elements. The embodiments described in the following example embodiments do not represent all embodiments consistent with the present disclosure. Instead, they are only examples of devices and methods consistent with some aspects of the present disclosure as detailed in the attached claims.

In the related art, when an electronic device casts content to another electronic device, all applications in the electronic device are cast to another electronic device. For example, the entire interface in the mobile phone is directly mirrored and cast to the vehicle terminal, so that the user can directly operate any application in the mobile phone on the vehicle terminal, and the security and privacy during the screen casting are poor.

The screen casting method provided by embodiments of the present disclosure displays the applications that allow screen casting in the screen casting interface of the first device. Based on user operation, the device can select the target application to be cast from the applications that allow screen casting, so as to display the casting screen of the target application in the screen casting interface, and improve the security and privacy during the screen casting while realizing the screen casting of the application.

The screen casting method provided by the embodiments of the present disclosure can be applied to the casting screen display between any devices.

For example, it is applied to screen casting between a mobile phone and an in-vehicle system. For example, when driving, a user casts an application on a mobile phone to an in-vehicle system, which makes it easier for the user to view the content on the mobile phone. However, for some relatively private applications, such as payment applications, instant messaging applications, etc., if the screen is cast to the in-vehicle system, it may be seen by other people in the vehicle. Therefore, in order to protect the privacy of the user and improve the privacy and security during the screen casting, the screen casting method provided by the embodiments of the present disclosure is adopted to cast the screen in the private screen casting mode, and the application that the user does not run to cast the screen is not displayed on the in-vehicle system.

Another example is applied to screen casting between a mobile phone and a computer. It can also be applied to screen casting between other devices, and the embodiments of the present disclosure do not limit this.

The screen casting method provided by the embodiments of the present disclosure can be performed by a first device or a second device. The first device is a screen casting source, and a second device is a screen casting device. For example, the first device can be a mobile phone, a tablet computer, a laptop computer, a smart home device, a wearable device, and the like, and the second device can be a mobile phone, a tablet computer, a laptop computer, a smart home device, a car terminal, and the like.

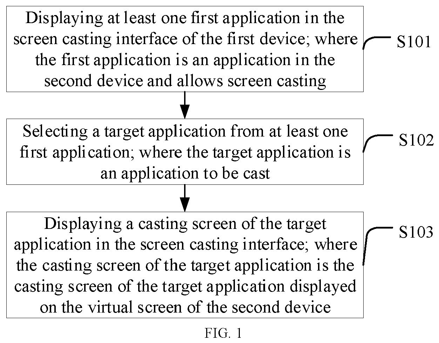

FIG. 1 is a flowchart of a screen casting method according to an example embodiment, which is executed by a first device. Referring to FIG. 1, the method includes the following steps:
Step S101, displaying at least one first application in the screen casting interface of the first device; where the first application is an application in the second device and allows screen casting.

In the embodiment of the present disclosure, the first application can be displayed in the screen casting interface, but the second application is not displayed in the screen casting interface. The first application is an application in the second device and allows screen casting, and the second application is an application in the second device and does not allow screen casting. The first application and the second application can be third-party applications or system applications. For example, the first application can be a video application, a music application, a game application, etc. in the second device, and the second application can be an instant messaging application, a payment application, etc. in the second device that involves user privacy. Which applications in the second device are the first applications and which applications in the second device are the second applications can be set by the user according to actual needs.

The screen casting interface is an interface displayed on the physical screen of the first device, and the display content on the virtual screen of the second device is displayed in the screen casting interface. The first device displays the content of the screen casting of the second device in the screen casting interface.

The first device and the second device can be interconnected through USB (Universal Serial Bus), Bluetooth, local area network, P2P (peer-to-peer, point-to-point direct connection technology), etc., and the embodiment of the present disclosure does not limit the interconnection method of the first device and the second device.

Step S102, selecting a target application from at least one first application; where the target application is an application to be cast.

After at least one first application is displayed in the screen casting interface, when the user wants to cast a certain first application in the at least one first application, the device selects, based on user operation, a target application from the at least one first application, and the target application is the application to be cast.

In some embodiments, in response to a selection operation of any first application in the at least one first application, the selected first application is used as the target application. The selection operation may be a click operation, a double-click operation, a sliding operation, or other operations.

In some examples, the first device sends a selection instruction to the second device so that the second device casts the screen of the target application to the first device based on the selection instruction. The selection instruction is configured to indicate the selection operation.

Step S103, displaying a casting screen of the target application in the screen casting interface; where the casting screen of the target application is the casting screen of the target application displayed on the virtual screen of the second device.

The casting screen of the target application can be an application interface of the target application or other screens of the target application.

The method provided by the embodiment of the present disclosure displays one or more applications that allow screen casting in the screen casting interface of the first device. The user can select the target application to be cast from the one or more applications that allows screen casting, so as to display the casting screen of the target application in the screen casting interface, which improves the security and privacy of screen casting while realizing the screen casting of the application.

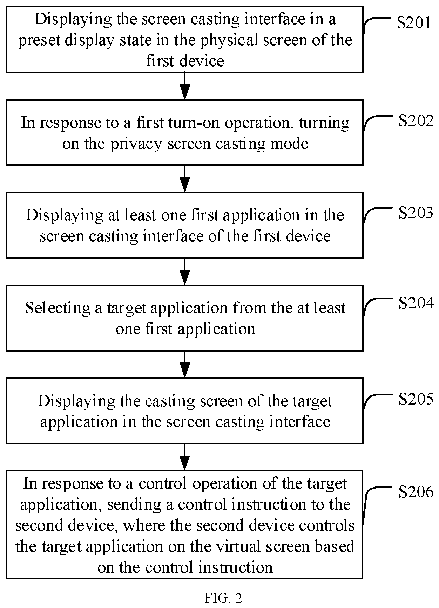

FIG. 2 is a flowchart of a screen casting method according to an example embodiment, which is executed by the first device. Referring to FIG. 2, and the method includes the following steps:
Step S201, displaying the screen casting interface in a preset display state in the physical screen of the first device.

The preset display state includes a floating capsule display state, a small window display state or a full screen display state. The preset display state can be set by the user as needed. Taking the screen casting between the mobile phone and the in-vehicle system as an example, if the user needs to view the navigation route provided by the in-vehicle system, the screen casting interface can be displayed in the floating capsule display state to avoid the screen casting interface blocking the navigation route provided by the in-vehicle system; if the user needs to view the navigation route provided by the cast navigation application on the mobile phone, the casting screen can be displayed in a small window display state or a full screen display state to facilitate the user to view the navigation route provided by the mobile phone.

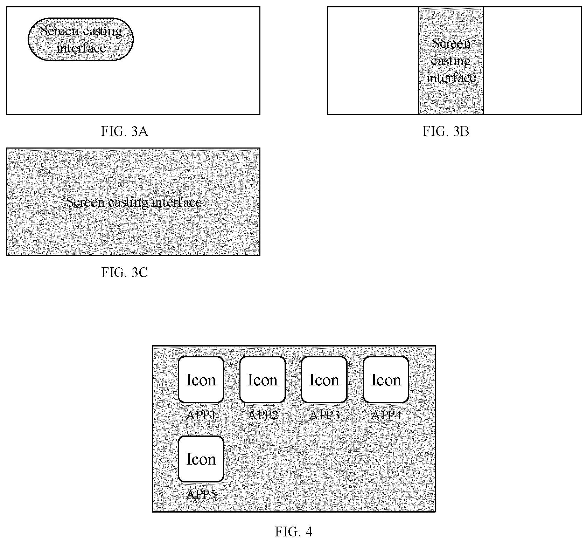

In an example, referring to the schematic diagrams of the screen casting interface shown in FIGS. 3A-3C, FIG. 3A is a screen casting interface displayed on the physical screen in the floating capsule display state (gray window in the figure), FIG. 3B is a screen casting interface displayed on the physical screen in the small window display state, and FIG. 3C is a screen casting interface displayed on the physical screen in the full screen display state.

Compared with the exclusive full-screen casting interface in the related art, in the embodiment of the present disclosure, the user can freely set the display state, enrich the display state of the screen casting interface, and improve the flexibility. The user can set the display state according to the display requirements.

It should be noted that the display state of the screen casting interface can be switched during the screen casting process. For example, the screen casting interface is first displayed in a small window display state, and then it can be switched to display the screen casting interface in a full screen display state.

Referring back to FIG. 2, Step S202, in response to a first turn-on operation, turning on the privacy screen casting mode.

The first turn-on operation is a turn-on operation on the privacy screen casting control in the screen casting interface. The privacy screen casting mode means that the first application can be cast on the first device, but the second application cannot be cast on the first device. The second application is an application that is not allowed to be cast on the second device. That is, the privacy screen casting control is displayed in the screen casting interface. When the user wants to open the privacy screen casting mode, the user can perform the first turn-on operation on the privacy screen casting control. The first device opens the privacy screen casting mode in response to the first turn-on operation.

In some embodiments, since the content displayed in the screen casting interface is obtained by casting the screen of the second device, after the user operates in the screen casting interface, it is also necessary to send a corresponding instruction to the second device, so that the second device controls the corresponding content on the virtual screen to operate. After the second device completes the corresponding operation, it casts to the first device again so that the latest content is displayed on the first device. For the turn-on process of the privacy screen casting mode, the first device sends the first turn-on instruction to the second device in response to the first turn-on operation, so that the second device opens the privacy screen casting mode based on the first turn-on instruction, and then the first device opens the privacy screen casting mode. The first turn-on instruction is configured to indicate the first turn-on operation.

It should be noted that step S202 is described by taking the user operating on the first device to open the privacy screen casting mode as an example. In another embodiment, the user can operate on the second device to open the privacy screen casting mode. In some embodiments, the second device sends the second turn-on instruction to the first device in response to the second turn-on operation. The first device receives the second turn-on instruction sent by the second device and opens the privacy screen casting mode of the first device based on the second turn-on instruction. The second turn-on instruction is configured to indicate the second turn-on operation, and the second turn-on operation is a turn-on operation on the privacy screen casting control in the second device.

It should be noted that the privacy screen casting mode can be turned on according to the needs of the user. After the privacy screen casting mode is turned on, if the user no longer needs the privacy screen casting mode, the privacy screen casting mode can also be turned off. When the privacy screen casting mode is turned off, it is not necessary to consider whether the application is the first application or the second application. That is, when the privacy screen casting mode is turned off, the second device can cast the first application to the first device, or can cast the second application to the first device, and the first device can display the first application in the screen casting interface, or can display the second application in the screen casting interface. The user can choose whether to turn on the privacy screen casting mode according to his/her own screen casting needs, which improves the flexibility and freedom when casting.

Step S203, displaying at least one first application in the screen casting interface of the first device.

In some embodiments, a target application list is displayed in the screen casting interface; the target application list includes at least one first application that allows screen casting, and does not include a second application that does not allow screen casting.

In some examples, the target application list includes an application icon and an application logo of the first application. In one example, referring to the schematic diagram of the screen casting interface shown in FIG. 4, all the applications displayed in the screen casting interface are first applications.

In some embodiments, the target application list is displayed based on a fake Launcher in the screen casting interface.

Step S204, selecting a target application from the at least one first application.

For example, the device selects, based on user operation, the target application from the at least one first application, and the target application is the application to be cast.

Step S205, displaying the casting screen of the target application in the screen casting interface.

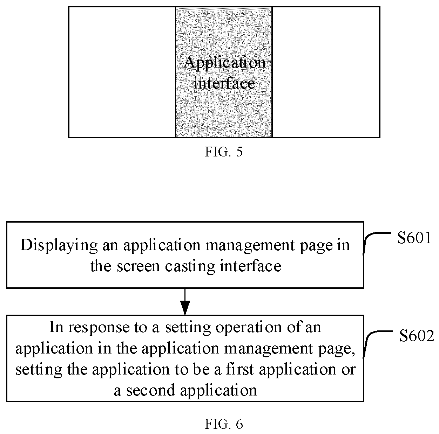

For example, the casting screen is an application interface of the target application. In one example, referring to the schematic diagram of the screen casting interface shown in FIG. 5, the application interface of the target application is displayed in the screen casting interface.

Step S206, in response to a control operation of the target application, sending a control instruction to the second device, where the second device controls the target application on the virtual screen based on the control instruction.

The control instruction is configured to indicate the control operation on the target application. For example, when the target application list is displayed in the screen casting interface, the control operation can be a turn-on operation of the target application; when the application interface of the target application is displayed in the screen casting interface, the control operation can be an operation on each control in the application interface. The control operation can also be other operations, and the embodiment of the present disclosure does not limit the control operation.

In some embodiments, the control instruction includes position information, and the position information is configured to characterize the position of the control operation relative to the physical screen of the target device.

In addition, for the screen casting process in the above embodiment, in some embodiments, the second device encodes the casting screen on the virtual screen to obtain the encoded display data, and then sends the display data to the first device. The first device decodes the display data to obtain the corresponding casting screen, and displays the casting screen in the screen casting interface. The casting screen on the virtual screen is the content displayed in the screen casting interface of the second device. For example, the casting screen is a screen displaying the target application list, or the casting screen is a screen displaying the application interface of the target application. In some examples, when sending display data, the second device may encapsulate the display data and send the encapsulated display data. After receiving the encapsulated display data, the first device first decapsulates the encapsulated display data to obtain the display data. The embodiment of the present disclosure does not limit the sending process of the casting screen during the screen casting process.

The method provided by the embodiment of the present disclosure displays one or more applications that allow screen casting in the screen casting interface of the first device. The user can select the target application program to be cast from the one or more applications that allow screen casting, so as to display the casting screen of the target application program in the screen casting interface, which improves the security and privacy during the screen casting while realizing the screen casting of the application.

Moreover, the privacy screen casting mode provided by the embodiment of the present disclosure is applicable to various display states of the screen casting interface, which has high flexibility, and improves the user's operation freedom.

In some embodiments, the user can set which applications are the first applications and which applications are the second applications on the first device. The setting process of the applications is described below through the embodiment shown in FIG. 6.

FIG. 6 is a flowchart of a setting process of applications according to an example embodiment, which is executed by the first device. Referring to FIG. 6, the method includes the following steps:
Step S601, displaying an application management page in the screen casting interface.

The application management page displays one or more applications in the second device, and the application management page is displayed on the virtual screen of the second device. In some examples, the application management page displays the application icon and application logo of the application, or displays the application logo of the application.

In some embodiments, the screen casting interface displays an entry to the application management page, and in response to a triggering operation of the entry, the application management page is displayed in the screen casting interface.

Step S602, in response to a setting operation of an application in the application management page, setting the application to be a first application or a second application.

The application is any application displayed in the application management page. The setting operation can be a move operation, a delete operation, an add operation or other operation on the application.

In some embodiments, the first device sends a setting instruction to the second device in response to the setting operation of the application in the application management page, so that the second device sets the application to be the first application or the second application based on the setting instruction, and then the first device sets the application to the first application or the second application. The setting instruction is configured to indicate the setting operation of the application.

In some embodiments, in response to a first setting operation on the application, the application is set as a first application, where the first setting operation is an operation of adding the application to a first application list in the application management page, and the first application list includes applications that allow screen casting; or, in response to a second setting operation on the application, the application is set as a second application, where the second setting operation is an operation of adding the application to a second application list in the application management page, and the second application list includes applications that do not allow screen casting.

In some examples, the application management page includes an unset list, a first application list, and a second application list. When an application is in the unset list, if the user wants to set the application as the first application, the user can move the application from the unset list to the first application list, and if the user wants to set the application as the second application, the user can move the application from the unset list to the second application list. When an application is in the first application list, if the user wants to set the application as the second application, the user can first perform a deletion operation on the application, and the deleted application is in the unset list, and then move the application from the unset list to the second application list. When an application is in the second application list, if the user wants to set the application as the first application, the user can first perform a delete operation on the application, and the deleted application is in the unset list, and then move the application from the unset list to the first application list.

In some examples, the application management page includes a first application list and a second application list. When an application is in the first application list, if the user wants to set the application as the second application, the user can first perform a delete operation on the application, and the deleted application is in the second application list. When an application is in the second application list, if the user wants to set the application as the first application, the user can first perform an add operation on the application, and the added application is in the first application list.

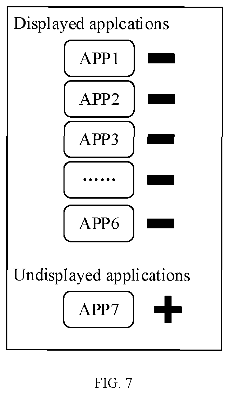

In an example, referring to the schematic diagram of the application management page shown in FIG. 7, FIG. 7 takes 7 APPs displayed in the application management page as an example. The first application list is APP 1-APP6 in the "Displayed Applications" list in FIG. 7. Each APP has a corresponding delete control. When the user wants to set the APP as an application that does not allow screen casting, click the corresponding delete control; the second application list is APP7 in the "Undisplayed Applications" list in FIG. 7. Each APP has a corresponding add control. When the user wants to set the APP as an application that allows screen casting, click the corresponding add control.

The application management page can also be in other forms. In the embodiments of the present disclosure, there is no restriction on the specific display form of the application in the application management page.

In some embodiments, the first device sends a first setting instruction to the second device in response to a first setting operation, so that the second device sets the application as the first application based on the first setting instruction, and then the first device sets the application as the first application, where the first setting instruction is configured to indicate the first setting operation. Alternatively, the first device sends a second setting instruction to the second device in response to a second setting operation, so that the second device sets the application as the second application based on the second setting instruction, and then the first device sets the application as the second application, where the second setting instruction is configured to indicate the second setting operation.

In the embodiments of the present disclosure, the user can set which applications are the first applications and which applications are the second applications according to actual needs, thereby controlling applications which allow screen casting and applications which don not allow screen casting, and improving the security and privacy during screen casting.

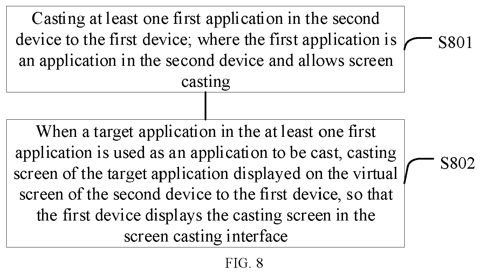

The embodiments shown in FIG. 1, FIG. 2 and FIG. 6 above illustrate the screen casting method from the perspective of the first device. The following describes the screen casting method from the perspective of the second device through the embodiment shown in FIG. 8.

FIG. 8 is a flowchart of a screen casting method according to an example embodiment, which is executed by the second device. Referring to FIG. 8, the method includes the following steps:
Step S801, casting at least one first application in the second device to the first device; where the first application is an application in the second device and allows screen casting.

In some embodiments, the target application list displayed on the virtual screen is cast to the first device, so that the first device displays the target application list in the screen casting interface.

Step S802, when a target application in the at least one first application is used as an application to be cast, casting screen of the target application displayed on the virtual screen of the second device to the first device, so that the first device displays the casting screen in the screen casting interface.

In some embodiments, the second device receives a selection instruction sent by the first device. Based on the selection instruction, the selected first application is used as the target application, and the screen of the target application displayed on the virtual screen of the second device is cast to the first device.

In some examples, the second device runs the target application on the virtual screen and displays the casting screen of the target application on the virtual screen.

The implementation of steps S801-802 is similar to the implementation of steps S101-S103 above, and will not be repeated here.

In some embodiments, the second device receives a first turn-on instruction sent by the first device; where the first turn-on instruction is configured to indicate a first turn-on operation, and the first turn-on operation is a turn-on operation on a private screen casting control in the screen casting interface. Based on the first turn-on instruction, the private screen casting mode is turned on, so that the first device turns on the private screen casting mode in the screen casting interface.

In some embodiments, the second device turns on the privacy screen casting mode of the second device in response to the second turn-on operation, and sends a second turn-on instruction to the first device, so that the first device turns on the privacy screen casting mode of the first device based on the second turn-on instruction; where the second turn-on instruction is configured to indicate the second turn-on operation, and the second turn-on operation is a turn-on operation on the privacy screen casting control in the second device.

In some embodiments, the second device casts the application management page to the first device, so that the first device displays the application management page in the screen casting interface; where one or more applications in the second device are displayed in the application management interface, and the application management page is displayed on the virtual screen of the second device.

In some embodiments, the second device receives a setting instruction sent by the first device; where the setting instruction is configured to indicate the setting operation of the application in the application management page. Based on the setting instruction, the second device sets the application to be the first application or the second application, so that the first device sets the application to be the first application or the second application.

In some embodiments, the application management page is displayed; where one or more applications in the second device are displayed in the application management page. In response to the setting operation of the application in the application management page, the application is set to be the first application or the second application; the second application is an application which does not allow screen casting in the second device.

In some embodiments, in response to a setting operation on an application in the application management page, setting the application to be the first application or the second application includes: in response to a first setting operation on the application, setting the application as a first application; where the first setting operation is an operation of adding the application to the first application list in the application management page, and the first application list includes one or more applications that allow screen casting; or, in response to a second setting operation on the application, setting the application as a second application; where the second setting operation is an operation of adding the application to the second application list in the application management page, and the second application list includes one or more applications that do not allow screen casting.

In some embodiments, the second device receives a control instruction sent by the first device; where the control instruction is configured to indicate a control operation on the target application; and based on the control instruction, the second device controls the target application on the virtual screen.

The implementation of the above embodiment is similar to the implementation of the embodiment shown in FIG. 2 and FIG. 6 above, and will not be repeated here.

In the method provided by the embodiment of the present disclosure, the second device casts the screen of the application that allows screen casting to the first device. The user can select the target application to be casted from the one or more applications that allow screen casting, and then the second device casts the screen of the target application to the first device, so that the first device displays the casting screen of the target application in the screen casting interface, and the security and privacy during screen casting are improved while realizing the screen casting of the application.

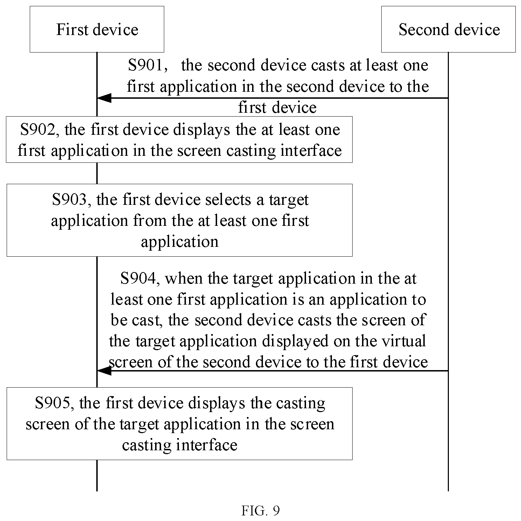

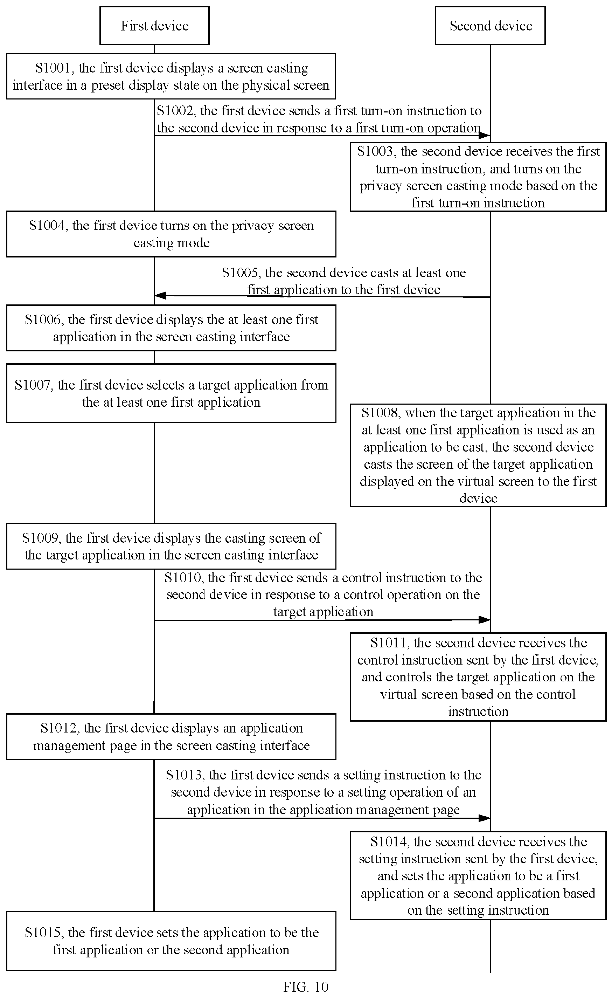

The screen casting method is described below from the perspective of the interaction between the first device and the second device through the embodiments shown in FIG. 9 and FIG. 10.

FIG. 9 is a flowchart of a screen casting method according to an example embodiment, which is interactively executed by the first device and the second device. Referring to FIG. 9, the method includes the following steps:
Step S901, the second device casts at least one first application in the second device to the first device.
Step S902, the first device displays the at least one first application in the screen casting interface.
Step S903, the first device selects a target application from the at least one first application.
Step S904, when the target application in the at least one first application is an application to be cast, the second device casts the screen of the target application displayed on the virtual screen of the second device to the first device.
Step S905, the first device displays the casting screen of the target application in the screen casting interface.

The implementation of steps S901-S905 is similar to the implementation of steps S101-S103 and steps S801-S802, which will not be repeated here.

According to the method provided by the embodiment of the present disclosure, the second device casts the application that allows screen casting to the first device, the first device selects the target application to be cast from the one or more applications that allow screen casting, and then the second device casts the screen of the target application to the first device, and the first device displays the casting screen of the target application in the screen casting interface, thereby improving the security and privacy of the screen casting while realizing the screen casting of the application.

FIG. 10 is a flowchart of a screen casting method according to an example embodiment, which is interactively executed by the first device and the second device. Referring to FIG. 10, the method includes the following steps:
Step S1001, the first device displays a screen casting interface in a preset display state on the physical screen.
Step S1002, the first device sends a first turn-on instruction to the second device in response to a first turn-on operation.
Step S1003, the second device receives the first turn-on instruction, and turns on the privacy screen casting mode based on the first turn-on instruction.
Step S1004, the first device turns on the privacy screen casting mode.
Step S1005, the second device casts at least one first application to the first device.
Step S1006, the first device displays the at least one first application in the screen casting interface.
Step S1007, the first device selects a target application from the at least one first application.
Step S1008, when the target application in the at least one first application is used as an application to be cast, the second device casts the screen of the target application displayed on the virtual screen to the first device.
Step S1009, the first device displays the casting screen of the target application in the screen casting interface.
Step S1010, the first device sends a control instruction to the second device in response to a control operation on the target application.
Step S1011, the second device receives the control instruction sent by the first device, and controls the target application on the virtual screen based on the control instruction.
Step S1012, the first device displays an application management page in the screen casting interface.
Step S1013, the first device sends a setting instruction to the second device in response to a setting operation of an application in the application management page.
Step S1014, the second device receives the setting instruction sent by the first device, and sets the application to be a first application or a second application based on the setting instruction.
Step S1015, the first device sets the application to be the first application or the second application.

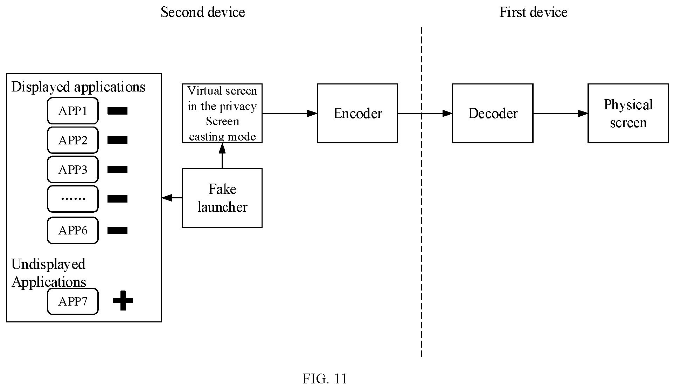

In one example, referring to the flowchart of the screen casting process shown in FIG. 11, when the user wants to set an application in the application management page, the application management page is displayed on the physical screen (or screen casting interface) of the first device (the application management page is shown in FIG. 7). The user can set the target application to be the first application or the second application. When the user sets it through the first device, the second device controls the application management page displayed on the virtual screen based on the fake Launcher to set the target application. After the setting is completed, the set application management page (i.e., the current screen casting screen) is displayed on the virtual screen. After that, the second device can call the encoder to encode the current casting screen to obtain the display data, and then send the display data to the first device. The first device calls the decoder to decode the display data, and then displays the casting screen (i.e., the set application management page) in the screen casting interface. The above screen casting process is to illustrate the screen casting process of the application management page. The screen casting process of other contents (e.g., the first application) is similar and will not be repeated here.

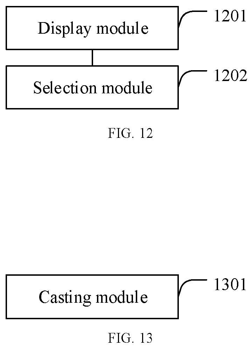

FIG. 12 is a block diagram of a screen casting device according to an example embodiment, which is configured in a first device. Referring to FIG. 12, the device includes:
a display module 1201, configured to display at least one first application in a screen casting interface of the first device; where the first application is an application that allows screen casting in the second device;
a selection module 1202, configured to select a target application from the at least one first application; where the target application is an application to be cast;
the display module 1201 is further configured to display the casting screen of the target application in the screen casting interface; the casting screen of the target application is a casting screen of the target application displayed on the virtual screen of the second device.

In some embodiments, the device further includes:
a turn-on module, configured to turn on a privacy screen casting mode in response to a first turn-on operation; where the first turn-on operation is a turn-on operation of a privacy screen casting control in the screen casting interface, and the privacy screen casting mode means that a first application can be cast on the first device, but a second application cannot be cast, and the second application is an application that does not allow screen casting in the second device.

In some embodiments, the device further includes:
a sending module configured to send a first turn-on instruction to the second device so that the second device turns on the privacy screen casting mode based on the first turn-on instruction; where the first turn-on instruction is configured to indicate a first turn-on operation.

In some embodiments, the device further includes:
a receiving module configured to receive a second turn-on instruction sent by the second device; where the second turn-on instruction is configured to indicate a second turn-on operation, and the second turn-on operation is a turn-on operation of the privacy screen casting control in the second device;
a turn-on module configured to turn on the privacy screen casting mode of the first device based on the second turn-on instruction.

In some embodiments, the device further includes:
a display module 1201, further configured to display an application management page in the screen casting interface; where the application management page displays one or more applications in the second device;
a setting module, configured to set an application to a first application or a second application in response to a setting operation on the application in the application management page; the second application is an application in the second device which does not allow screen casting.

In some embodiments, the setting module is configured to:
set the application to be the first application in response to a first setting operation on the application; where the first setting operation is an operation of adding the application to a first application list in the application management page, and the first application list includes applications which allow screen casting; or,
set the application to be the second application in response to a second setting operation on the application; where the second setting operation is an operation of adding the application to a second application list in the application management page, and the second application list includes applications which do not allow screen casting.

In some embodiments, the device further includes:
a sending module, configured to send a setting instruction to the second device, so that the second device sets the application to be the first application or the second application based on the setting instruction; where the setting instruction is configured to indicate the setting operation on the application.

In some embodiments, the display module 1201 is configured to display the screen casting interface in a preset display state on the physical screen of the first device; where the preset display state includes a floating capsule display state, a small window display state or a full screen display state.

In some embodiments, the device further includes:
a sending module configured to send a control instruction to the second device in response to a control operation on the target application, so that the second device controls the target application on the virtual screen based on the control instruction; where the control instruction is configured to indicate the control operation on the target application.

Regarding the device in the above embodiment, the specific manner in which each module performs the operation has been described in detail in the embodiment of the method, and will not be described in detail here.

FIG. 13 is a block diagram of a screen casting device according to an example embodiment, which is configured in a second device. Referring to FIG. 13, the device includes:
a screen casting module 1301, configured to cast at least one first application in the second device to the first device; where the first application is an application in the second device and allows screen casting;
the screen casting module 1301 is further configured to cast the screen of the target application displayed on the virtual screen of the second device to the first device when the target application in the at least one first application is the application to be cast, so that the first device displays the casting screen in the screen casting interface.

In some embodiments, the device further includes:
a receiving module, configured to receive a first turn-on instruction sent by the first device; where the first turn-on instruction is configured to indicate a first turn-on operation, and the first turn-on operation is a turn-on operation of the privacy projection control in the screen casting interface;
a turn-on module, configured to turn on the privacy screen casting mode based on the first turn-on instruction, so that the first device turns on the privacy screen casting mode in the screen casting interface.

In some embodiments, the device further includes:
a turn-on module configured to turn on the privacy screen casting mode of the second device in response to the second turn-on operation;
a sending module configured to send a second turn-on instruction to the first device, so that the first device turns on the privacy screen casting mode of the first device based on the second turn-on instruction; where the second turn-on instruction is configured to indicate the second turn-on operation, and the second turn-on operation is a turn-on operation of the privacy screen casting control in the second device.

In some embodiments, the screen casting module 1301 is further configured to cast the application management page to the first device, so that the first device displays the application management page in the screen casting interface; where one or more applications in the second device are displayed in the application management interface, and the application management page is displayed on the virtual screen of the second device.

In some embodiments, the device further includes:
a receiving module configured to receive a setting instruction sent by the first device; where the setting instruction is configured to indicate a setting operation for a target application in the application management page;
a setting module configured to set the target application to be a first application or a second application based on the setting instruction, so that the first device sets the target application to be the first application or the second application.

In some embodiments, the device further includes:
a display module configured to display an application management page; where the application management page displays one or more applications in the second device;
a setting module configured to set an application to be a first application or a second application in response to a setting operation on the application in the application management page; the second application is an application in the second device which does not allow screen casting.

In some embodiments, the setting module is configured to:
set the application to be a first application in response to a first setting operation on the application; where the first setting operation is an operation of adding the application to a first application list in the application management page, and the first application list includes applications which allow screen casting; or,
set the application to be a second application in response to a second setting operation on the application; where the second setting operation is an operation of adding the application to a second application list in the application management page, and the second application list includes applications which do not allow screen casting.

In some embodiments, the device further includes:
a receiving module configured to receive a control instruction sent by the first device; where the control instruction is configured to indicate a control operation on a target application;
a control module configured to control the target application on the virtual screen based on the control instruction.

Regarding the device in the above embodiment, the specific manner in which each module performs the operation has been described in detail in the embodiment of the method, and will not be elaborated here.

The embodiment of the present disclosure also provides an electronic device, including: a processor; a memory for storing processor executable instructions; where the processor is configured to execute the screen casting method in the above embodiment.

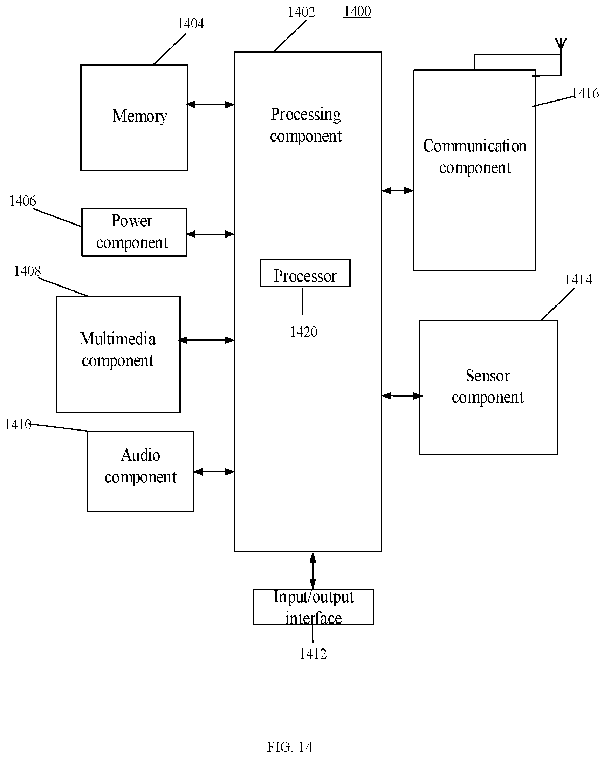

FIG. 14 is a block diagram of an electronic device 1400 according to an example embodiment. The electronic device 1400 can be any of the first device or the second device described above.

Referring to FIG. 14, the electronic device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 generally controls the overall operation of the electronic device 1400, such as operations associated with display, phone calls, data communications, camera operations, and recording operations. The processing component 1402 may include one or more processors 1420 to execute instructions to complete all or part of the steps of the above method. In addition, the processing component 1402 may include one or more modules to facilitate interaction between the processing component 1402 and other components. For example, the processing component 1402 may include a multimedia module to facilitate interaction between the multimedia component 1408 and the processing component 1402.

The memory 1404 is configured to store various types of data to support operations on the electronic device 1400. Examples of such data include instructions for any application or method operating on the electronic device 1400, contact data, phone book data, messages, pictures, videos, etc. The memory 1404 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 1406 provides power to various components of the electronic device 1400. The power component 1406 may include a power management system, one or more power supplies, and other components associated with generating, managing, and distributing power for the electronic device 1400.

The multimedia component 1408 includes a screen that provides an output interface between the electronic device 1400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1408 includes a front camera and/or a rear camera. When the electronic device 1400 is in an operating mode, such as a shooting mode or a video mode, the front camera and/or the rear camera may receive external multimedia data. Each of the front camera and the rear camera may be a fixed optical lens system or have focal length and optical zoom capabilities.

The audio component 1410 is configured to output and/or input audio signals. For example, the audio component 1410 includes a microphone (MIC), and when the electronic device 1400 is in an operation mode, such as a call mode, a recording mode, and a voice recognition mode, the microphone is configured to receive an external audio signal. The received audio signal can be further stored in the memory 1404 or sent via the communication component 1416. In some embodiments, the audio component 1410 also includes a speaker for outputting an audio signal.

I/O interface 1412 provides an interface between processing component 1402 and peripheral interface modules, such as keyboards, click wheels, buttons, etc. These buttons may include, but are not limited to, home buttons, volume buttons, start buttons, and lock buttons.

Sensor component 1414 includes one or more sensors for providing various aspects of status assessment for electronic device 1400. For example, sensor component 1414 can detect the open/closed state of electronic device 1400, the relative positioning of components, such as the display and keypad of electronic device 1400, sensor component 1414 can also detect the position change of electronic device 1400 or a component of electronic device 1400, the presence or absence of user contact with electronic device 1400, the orientation or acceleration/deceleration of electronic device 1400, and the temperature change of electronic device 1400. Sensor component 1414 may include a proximity sensor configured to detect the presence of nearby objects without any physical contact. Sensor component 1414 may also include a light sensor, such as a CMOS or CCD image sensor, for use in imaging applications. In some embodiments, the sensor component 1414 may also include an acceleration sensor, a gyroscope sensor, a magnetic sensor, a pressure sensor or a temperature sensor.

The communication component 1416 is configured to facilitate wired or wireless communication between the electronic device 1400 and other devices. The electronic device 1400 may access a wireless network based on a communication standard, such as WiFi, 4G or 5G, or a combination thereof. In an example embodiment, the communication component 1416 receives a broadcast signal or broadcast-related information from an external broadcast management system via a broadcast channel. In an example embodiment, the communication component 1416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the electronic device 1400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an example embodiment, a non-transitory computer-readable storage medium including instructions is also provided, such as a memory 1404 including instructions, and the above instructions can be executed by the processor 1420 of the electronic device 1400 to complete the above method. For example, the non-transitory computer-readable storage medium can be a ROM, a random access memory (RAM), a CD-ROM, a tape, a floppy disk, and an optical data storage device, etc.

The embodiment of the present disclosure also provides a non-transitory computer-readable storage medium, and when the instructions in the storage medium are executed by the processor of the electronic device, the electronic device can perform the screen casting method in the above embodiment.

After considering the specification and practicing the present disclosure herein, it will be easy for those skilled in the art to think of other embodiments of the present disclosure. This application is intended to cover any variation, use or adaptive change of the present invention, which follows the general principles of the present disclosure and includes common knowledge or conventional technical means in the technical field that are not disclosed in the present disclosure. The description and embodiments are to be regarded as exemplary only, and the true scope and spirit of the present disclosure are indicated by the following claims.

It should be understood that the present disclosure is not limited to the precise structure described above and shown in the drawings, and various modifications and changes can be made without departing from its scope. The scope of the present disclosure is limited only by the accompanying claims.

## Claims

1. A screen casting method, comprising:
(S101) displaying at least one first application in a screen casting interface of a first device, wherein the at least one first application is an application in a second device and allows screen casting;
(S102) selecting a target application from the at least one first application, wherein the target application is an application to be cast; and
(S103) displaying a casting screen of the target application in the screen casting interface, wherein the casting screen of the target application is the casting screen of the target application displayed on a virtual screen of the second device.

2. The screen casting method according to claim 1, further comprising:
(S202) in response to a first turn-on operation, turning on a private screen casting mode,
wherein the first turn-on operation is a turn-on operation of a private screen casting control in the screen casting interface, and
in the private screen casting mode, the first application is capable of casting on the first device, and a second application is not capable of casting on the first device, wherein the second application is an application in the second device and does not allow screen casting,
optionally, the method further comprises:
(S1002) sending a first turn-on instruction to the second device, wherein the second device turns on the privacy screen casting mode based on the first turn-on instruction, and the first turn-on instruction is configured to indicate the first turn-on operation.

3. The screen casting method according to claim 1 or 2, further comprising:
receiving a second turn-on instruction sent by the second device, wherein the second turn-on instruction is configured to indicate a second turn-on operation, and the second turn-on operation is a turn-on operation of a privacy screen casting control in the second device; and
based on the second turn-on instruction, turning on the privacy screen casting mode of the first device.

4. The screen casting method according to any one of the preceding claims, further comprising:
(S601) displaying an application management page in the screen casting interface, wherein one or more applications in the second device are displayed in the application management page; and
(S602) in response to a setting operation of an application in the application management page, setting the application to be the first application or a second application, wherein the second application is an application in the second device and does not allow screen casting.

5. The screen casting method according to claim 4, wherein in response to the setting operation of the application in the application management page, setting the application to be the first application or the second application comprises:
in response to a first setting operation of the application, setting the application to be the first application; wherein the first setting operation is an operation of adding the application to a first application list in the application management page, and the first application list comprises one or more applications which allow screen casting; or
in response to a second setting operation of the application, setting the application to be the second application; wherein the second setting operation is an operation of adding the application to a second application list in the application management page, and the second application list comprises one or more applications that do not allow screen casting,
optionally, the method further comprises:
(S1013) sending a setting instruction to the second device, wherein the second device sets the application to be the first application or the second application based on the setting instruction, and the setting instruction is configured to indicate the setting operation of the application.

6. The screen casting method according to any one of the preceding claims , further comprising:
(S201) displaying the screen casting interface in a preset display state on a physical screen of the first device, wherein the preset display state comprises a floating capsule display state, a small window display state or a full screen display state.

7. The screen casting method according to any one of the preceding claims , further comprising:
(S206) in response to a control operation on the target application, sending a control instruction to the second device, wherein the second device controls the target application on the virtual screen based on the control instruction, and the control instruction is configured to indicate the control operation on the target application.

8. A screen casting method, comprising:
(S801) casting at least one first application to a first device; wherein the at least one first application is an application in a second device and allows screen casting; and
(S802) in response to a target application in the at least one first application being an application to be cast, casting a screen of the target application displayed on a virtual screen of the second device to the first device, wherein the first device displays the casting screen in a screen casting interface.

9. The screen casting method according to claim 8, further comprising:
(S1003) receiving a first turn-on instruction sent by the first device, wherein the first turn-on instruction is configured to indicate a first turn-on operation, and the first turn-on operation is a turn-on operation of a privacy screen casting control in the screen casting interface; and
based on the first turn-on instruction, turning on a privacy screen casting mode, wherein the first device turns on the privacy screen casting mode in the screen casting interface.

10. The screen casting method according to claim 8 or 9, further comprising:
in response to a second turn-on operation, turning on a privacy screen casting mode of the second device, and sending a second turn-on instruction to the first device,
wherein the first device turns on the privacy screen casting mode of the first device based on the second turn-on instruction;
wherein the second turn-on instruction is configured to indicate the second turn-on operation, and the second turn-on operation is a turn-on operation of a privacy screen casting control in the second device.

11. The screen casting method according to any one of claims 8 to 10, further comprising:
casting an application management page to the first device, wherein the first device displays the application management page in the screen casting interface, and the application management page displays one or more applications in the second device,
optionally, the method further comprises:
(S1014) receiving a setting instruction sent by the first device, wherein the setting instruction is configured to indicate a setting operation of the target application in the application management page; and
based on the setting instruction, setting the target application to be the first application or a second application, wherein the first device sets the target application to be the first application or the second application.

12. The screen casting method according to any one of claims 8 to 11, further comprising:
(S601) displaying an application management page; wherein one or more applications in the second device are displayed in the application management page; and
(S602) in response to a setting operation of an application in the application management page, setting the application to be the first application or a second application, wherein the second application is an application in the second device and does not allow screen casting,
optionally, in response to the setting operation of the application in the application management page, setting the application to be the first application or the second application comprises:
in response to a first setting operation of the application, setting the application to be the first application; wherein the first setting operation is an operation of adding the application to a first application list in the application management page, and the first application list comprises one or more applications which allow screen casting; or
in response to a second setting operation of the application, setting the application to be the second application; wherein the second setting operation is an operation of adding the application to a second application list in the application management page, and the second application list comprises one or more applications that do not allow screen casting.

13. The screen casting method according to any one of claims 8 to 12, further comprising:
(S1011) receiving a control instruction sent by the first device, wherein the control instruction is configured to indicate a control operation on the target application; and
based on the control instruction, controlling the target application on the virtual screen.

14. A screen casting device, adapted to perform the method according to any one of claims 1 to 13.

15. A non-transitory computer-readable storage medium storing instructions that, when executed by a processor of an electronic device, cause the electronic device to perform the screen casting method according to any one of claims 1 to 13.
